# EUROPEAN PATENT SPECIFICATION

(11) **EP 2 323 743 B1**
(45) Date of publication and mention of the grant of the patent: **26.06.2019**
(21) Application number: 09811751.8
(22) Date of filing: 31.08.2009
(51) Int. Cl.: F25B 29/00, F25B 30/02, B01D 1/28, B01D 5/00, B01D 3/10

(54) **METHOD FOR EVAPORATION AND POSSIBLE DISTILLATION OF FLUIDS USING A HEAT PUMP**
VERFAHREN ZUR VERDAMPFUNG UND MÖGLICHEN DESTILLATION VON FLUIDEN MITHILFE EINER WÄRMEPUMPE
PROCÉDÉ D'ÉVAPORATION ET ÉVENTUELLEMENT DE DISTILLATION DE LIQUIDES AU MOYEN D'UNE POMPE À CHALEUR

(30) Priority: 02.09.2008 NO 20083783
(43) Date of publication of application: 25.05.2011
(73) Proprietor: Heggen, Lars Harald, 3031 Drammen (NO)
(72) Inventor: Heggen, Lars Harald, 3031 Drammen (NO)
(74) Representative: Elsworth, Dominic Stephen
(86) International application number: PCT/NO2009/000305
(87) International publication number: WO 2010/027268

(56) References cited:
- WO-A1-83/02445
- WO-A1-02/081298
- CH-A- 239 501
- DE-A1- 3 227 958
- DE-A1- 19 712 325
- DE-C1- 19 723 566
- FR-A1- 2 478 264
- US-A- 1 874 620
- US-A- 4 181 577
- US-A- 4 345 971
- US-A- 4 565 161
- US-A- 4 770 748
- US-A- 5 108 475
- US-A- 5 439 560
- US-A1- 2004 007 451

## Description

The invention relates to a method for evaporation of liquids with the assistance of a heat pump for producing evaporated liquids for industrial or other technical purposes, including distillation.

### Background

Evaporation of liquids is necessary in many processes, among which are both production of evaporated liquids as energy carriers (where the typical example is the production of steam) and distillation processes (where the most known process is production of ethanol from a fermented solution of sugar in water).

Steam has many uses, in many cases due to water's thermal properties which are a relatively high heat of evaporation, relatively high heat capacities in all three phases and also a relatively high melting heat. But the high heat of evaporation makes the production of steam energy-intensive, since much energy is being consumed to evaporate water. The traditional way of producing steam is to heat water in boilers with traditional energy sources, such as oil, gas, coal or electricity. In the past wood was also used for this purpose, as with the first steam locomotives.

With the assistance of heat pumps significant amounts of energy can be obtained from vast energy reservoirs, such as rivers, lakes, oceans, air, solar radiation, or the Earth's geothermal resources. The problem is to obtain sufficiently high temperature to evaporate water. The boiling point of water is 100°C at the pressure of 1 atm. or 101.3 kPa.

### Known technologies

Already known are:
1. US 4,565,161, which describes an apparatus for generating steam that utilises energy stored in a waste-water reservoir or waste air conduit.
2. DE 19712325, which describes a steam power plant including an gas motor where heat energy required for thermal compression/cooling is realised by a heat pump associated with a low temperature heat source.
3. US 5,439,560, which describes a low pressure evaporation concentrating apparatus for a photographic process waste disposal.
4. US 2004/0007451, which describes an evaporation system that uses the weight of the condensed liquid as an energy source.
5. United States patent US 4,345,971 A1 (Watson) dated 1982.03.24 relating to distillation with a heat pump.
6. German patent DE 33 27 958 A1 (Sasakura) date 1984.02.09 relating to distillation of salt water with a heat pump.
7. United States patent US 4,770,748 A1 (Roncell) dated 1988.09.13 relating to vacuum distillation system.

### Short description of the invention:

According to the invention therein provided a method for the evaporation and/or distillation of liquid as specified in Claim 1.

The advantage of the present invention is in how the low-temperature heat produced by a heat pump is used to evaporate liquids.

The invention enables to use the low-temperature heat produced by a heat pump in its condenser (high pressure side) to evaporate liquids under a reduced pressure and therefore a reduced temperature of evaporation. For example, by reducing the pressure to 10kPa (approx. 0.1 atm), the water's temperature of evaporation will be decreased to 45, 8°C. Most refrigerants on the market have a maximum condensation temperature below or slightly above 100°C which is not a sufficient temperature to evaporate water at atmospheric pressure.

By reducing the evaporation pressure, it will be possible to evaporate, for example, water with a heat pump. After evaporation the steam must be compressed to obtain a working pressure and temperature.

The object of the present invention is to provide energy to the most energy-intensive part of the steam production (the transition from the liquid phase to the gas phase) from a natural reservoir.

Similar problems as described above arise when liquids are evaporated in distillation processes, and the present invention can also be applied to a distillation process, for example, to the production of alcohol in various forms being the most typical. It can also be applied for separation of liquids such as the separation of oil products from tar/oil sand.

### Description of the figure

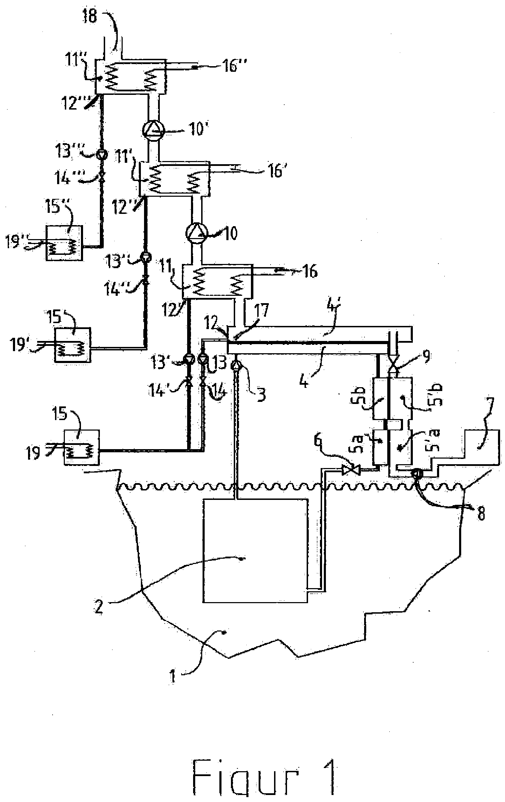

Figure 1 shows an exemplary embodiment illustrating the method with a distillation process for extracting two distilled products from a solution.

### Detailed description:

1) Energy reservoir for the heat pump.
   It can be rivers, lates, oceans, air, solar energy or geothermal energy. In FIG. 1 a cross section of a river is shown as the reservoir.
2) The heat pump's evaporator.
   This is the heat pump's low pressure side where the refrigerant is heated and evaporated by the heat retrieved from the energy reservoir (1).
3) The heat pump's compressor.
   Here the refrigerant is compressed to a higher pressure and temperature to enable evaporation of liquids in the next stage.
4) The heat pump's condenser. (see item 4')
   This is the heat pump's high pressure side in a heat exchanger, where the refrigerant is cold and recondensated by the liquids being evaporated.
5 a, b,...) The heat pump's possible extra heat exchangers for cooling the refrigerant.
   (see item 5' a, b,...)
   Depending on the operating characteristics of the system and the thermal properties of the refrigerant, it may be possible to utilise the heat of the refrigerant in condensated state on the heat pump's high pressure side to preheat the liquids.
   For the best utilisation of this heat, the preheating can be carried out in multiple stages. This heat can also be used for other purposes.
6) The heat pump's pressure reduction valve.
   This valve reduces the pressure from the heat pump's high pressure side to its low pressure side, which reduces the refrigerant's evaporation/saturation temperature and enables the refrigerant to evaporate again in the heat pump's evaporator (2).
7) Device for supply of liquids to be evaporated.
   This is an intake/inlet for liquids to be evaporated, alternatively, tank(s) or container(s) for the said liquids.
8) Possible supply pump or feeding device for liquids.
   This device may be required if, for various reasons, there is a significant pressure drop on the supply side, or when the liquids are required to be measure out.
5'a, b,...) Possible heat exchangers for preheating of liquids. (see item 5 a, b,...)
   Depending on the operating characteristics of the system and the thermal properties of the refrigerant, it may be possible to utilise the heat of the refrigerant in condensated state on the heat pump's high pressure side to preheat the liquids. For the best utilisation of this heat, the preheating can be carried out in multiple stages.
9) Possible pressure reduction valve or device for control of the evaporation pressure of the liquids.
   To maintain the pressure required to evaporate the liquids a valve or other device may be required on the supply side. Alternatively, a high column (riser) can be used to reduce the pressure with the help of the density of the said liquids and gravitations; or a combination of the said methods can be used.
10) Steam compressor.
   This compressor creates the low evaporation pressure in the evaporator (4') as well as compresses the evaporated liquids to a higher pressure for further use. In a distillation process this compressor operates in the first stage.
10') Steam compressor for multiple stages in a distillation process.
   This compressor compresses the evaporated liquids in order to enable extracting of the next distilled product in the next heat exchanger. Depending on how many components are to be extracted, this stage will be repeated the required number of times in order to separate all the distillates.
11) Intermediate heat exchanger. (see item 16)
   This is the first one of possible multiple stages of heat exchangers for further heating of the evaporated liquids.
11') Intermediate heat exchanger. (see item 16')
   This is the possible second stage of heat exchangers for further heating or recondensating. Normally it will be one or more stages in a distillation process.
11") Intermediate heat exchanger. (see item 16")
   This is the possible next stage in a multiple distillation process. The remaining evaporated liquids are directed to a new compression stage; when all distillates are extracted the remaining residuals are directed to an outlet (18). Depending on how many components are to be extracted, this stage together with the steam compressor for multiple stages (10') will be repeated the required number of times in order to separate all the distillates.
12) Drainage device for remaining unevaporated products.
   This is a possible outlet or a drainage for the products that are not to be evaporated in a distillation process. If saltwater is to be distilled, this device must also be able to remove salt and other solids.
12') Drainage device for evaporated and recondensated residuals.
   This is a possible outlet or a drainage for the liquids that are panically evaporated in the evaporator (4'), but not wanted as distillates. Normally this one is not used for the reason that the intermediate heat exchanger (11) can be designed so that the said recondenstated residuals would flow back into the evaporator (4') to be drained by the drainage device or outlet (12).
12") Drainage device for distillates.
   Here the first distillate is drawn off.
12''') Drainage device for distillates.
   Here the next distillate is drawn off. Depending on how many components are to be extracted, this stage together with the steam compressor for multiple stages (10') and the intermediate heat exchanger (11") will be repeated the required number of times in order to separate all the distillates.
13) Pump for unevaporated residuals in a distillation process.
   A pump or another device for removing the residuals from the evaporator for liquids (4') is necessary for maintaining the required low evaporation pressure.
13') Pump for unevaporated and recondensated residuals.
   If a drainage device for evaporated and recondensated residuals (12') is installed as a part of the intermediate heat exchanger (11) it will be required to use a pump or another device for removing the residuals from the process in order to maintain the required low evaporation pressure.
13") Pump for distillates.
   To ensure the correct pressure through the distillation process, a pump is required to draw off the first distillate.
13''') Pump for distillates.
   To ensure the correct pressure through the distillation process a pump is required to draw off the next distillate. Depending on how many components are to be extracted, this stage together with the steam compressor for multiple stages (10'), the intermediate heat exchanger (11") and the drainage device for distillates (12''') will be repeated the required number of times in order to separate all the distillates.
14) Valve.
   This valve is used in case where the possible pump and or the drainage device (12 and 13) are not able to measure out the residuals accurately enough to maintain the correct evaporation pressure in the evaporator (4').
14') Valve.
   This valve is used in case when the possible pump and or the drainage device (12' and 13') are not able to measure out the residuals accurately enough to maintain the correct evaporation pressure in the evaporator (4').
14") Valve.
   This valve is used in case when the possible pump and or the drainage device (12" and 13") are not able to measure out the distillates accurately enough to maintain the correct recondensation pressure in the intermediate heat exchanger (11').
14''') Valve.
   This valve is used in case when the possible pump and or the drainage device (12''' and 13''') are not able to measure out the distillates accurately enough to maintain the correct recondensation pressure in the intermediate heat exchanger (11"). Depending on how many components are to be extracted, this stage together with the steam compressor for multiple stages (10'), the intermediate heat exchanger (11"), the drainage device for distillates (12''') and the pump for distilled products (13''') will be repeated the required number of times in order to separate all the distillates.
15) Drainage device or tank for residuals. (see item 19)
   If the residuals from a distillation process need to be collected or processed further, a tank or a container is required to collect them. Otherwise they are directed to a waste outlet.
15') Container or tank for distilled products. (see item 19')
   Here the first distillate is collected.
15") Container or tank for distilled products. (see item 19")
   Here the next distillate is collected. Depending on how many components are to be extracted, this stage together with the steam compressor for multiple stages (10'), the intermediate heat exchanger (11"), the drainage device for distillates (12'''), the pump for distilled products (13''') and the possible valve (14''') will be repeated the required number of times in order to separate all the distillates.
16) Heater element for intermediate heat exchanger. (see item 11)
   This is a heater element for a possible intermediate heat exchanger (11). This element is the first stage of the heat pump's condenser (4) in order to utilize the refrigerants temperature after compression. In this case the heat exchanger (11) will help to increase the steam temperature in order to reduce the amount of saturation of the steam.
16') Cooling or heater element for intermediate heat exchanger. (see item 11')
   This is a cooling or heater element for a possible intermediate heat exchanger (11'). Depending on the application of the invention, this element can either have its own circuit for cooling or heating of the evaporated liquids or be connected with the cooling or heater element for intermediate heat exchanger (16). If this element has its own circuit, which will be the case in a distillation process, where intermediate heat exchanger (11') will be one of more stages in the process, the element could be connected with heat exchanger (4),(5a, 5b,...) to contribute to heating of the liquids in possible pre-heaters (5'a, 5'b,...) and evaporator (4'), or form a separate circuit with one or more of these. It is also possible to connect the element to external heat exchangers for other use.
16") Cooling or heater element for intermediate heat exchanger. (see item 11")
   This is a cooling or heater element for a possible intermediate heat exchanger (11"). Depending on the application of the invention, this element can have its own circuit for cooling or heating of the evaporated liquids or be connected with the cooling or heater element for intermediate heat exchangers (16 and 16'). The elements (16, 16', 16",...) can either be connected in series, in parallel or in any suitable combination. If this element has its own circuit, which will be the case in a distillation process, where intermediate heat exchanger (11") will be one of more stages in the process, the element could be connected with heat exchanger (4),(5a, 5b,...) to contribute to heating of the liquids in possible pre-heaters (5'a, 5'b,...) and evaporator (4'), or form a separate circuit with one or more of these. It is also possible to connect the element to external heat exchangers for other use. Depending on how many components are to extracted, this stage is repeated together with the intermediate heat exchanger (11") as many times as required.
17) Device for regulating the level of liquids in evaporator.
   In order to evaporate all components that are to be separated by distillation it may be required to regulate the level of liquid in the evaporator (4') which can be done by either a device designed in any practical form or shape, installed on the outlet for residuals (12) or, for example, simply by locating the outlet or the drainage device (12) in a specific position in the evaporator (4').
18) Outlet for steam or evaporated residuals from a distillation process.
   For steam production this is the stage where the steam has reached its final state and is directed to whatever industrial or other use it is intended for. In a distillation process the components still evaporated and not to be condensated are let out here.
19) Cooling element for drainage device or tank for residuals. (see item 15)
   This is a possible cooling element for cooling of residuals from a distillation process. It is used to extract the heat added to the residuals in the evaporator (4'). This element can be connected with the heat exchanger (4), (5a, 5b,...) to contribute to heating of the liquids in the evaporator (4') and the pre-heaters (5'a, 5'b,...). It is also possible to connect the element to external heat exchangers for another use.
19') Cooling element to container or tank for distillates. (see item 15')
   This is a possible cooling element for cooling of the first distillate from a distillation process. It is used to extract the heat left after recondensation of the first distillate in the intermediate heat exchanger (11'). This element can be connected as described for the element (19).
19") Cooling element to container or tank for distillates. (see item 15")
   This is a possible cooling element for cooling of the next distilled from a distillation process. It is used to extract the heat left after recondensation of the next distillate in the intermediate heat exchanger (11"). This element can be connected as described for the element (19). Depending on how many components are to be extracted, this stage is repeated together with the container or tank for distillates (15") as many times as required.

### Configuration of two typical applications of the invention based on the examplary embodiment shown in Figure 1:

A) Steam production.
   For sheer steam production from water the elements of the heat pump will be: (1), (2), (3), (4), (5a), (for optimal utilisation fo the heat, possibly (5b)), and (6). The water intake (7) will normally be from a reservoir or a water pipeline. Depending on the water supply, a pump (8) may or may not be required. Preheating of water is carried out with a preheater (5'a), (for optimal utilisation fo the heat, possibly, (5'b)). Depending on the height from the water intake (7) or pump (8) to the evaporator for liquids (4'), a pressure reduction valve (9) may be required to ensure a low evaporation pressure. Evaporation is carried out in the evaporator for liquids (4'). An intermediate heat exchanger (11) with a cooling/heating element (16) is used to reduce steam saturation before it reaches the steam compressor (10). Further, the steam is passed to an outlet (18) to be used for other purposes.

## Claims

1. Method for the evaporation and/or distillation of liquids with the assistance of a heat pump, the heat pump comprising a refrigerant evaporator (2) where the refrigerant is heated and evaporated by the heat retrieved from a natural energy reservoir; a refrigerant condenser (4), where the refrigerant is cooled and recondensated by the liquids being evaporated and a refrigerant compressor (3) there between, the refrigerant condenser (4) having an inlet and an outlet,
the method comprising:
- supplying the liquids to be evaporated to an inlet of a liquid evaporator (4');
- evaporating said liquids in the liquids evaporator (4') by the heat released from cooling and recondensing the refrigerant in the refrigerant condenser (4), wherein the heat pump's refrigerant condenser (4) and liquids evaporator (4') comprise a heat exchanger and wherein the evaporation pressure is reduced with either a pressure reduction valve (9) fitted on the inlet side of the liquids evaporator (4') or by means of natural resistance at the inlet of the evaporator (4') together with an evaporated liquids a compressor (10) for suction of the evaporated liquids from the evaporator (4'), the method **characterised by** the step of:
- further heating the evaporated liquids that have exited the liquids evaporator (4') outlet before the evaporated liquids enter the evaporated liquids compressor (10) in a separate heat exchanger (11) situated upstream of the evaporated liquids compressor (10) and downstream of the liquids evaporator (4') outlet to eliminate saturation of the evaporated liquids before the compressor (10), wherein the separate heat exchanger (11) comprises a heater element (16), an evaporated liquids inlet in fluid communication with the evaporator (4') outlet and a heated fluids outlet in fluid communication with the compressor (10), said heater element (16), forming the first stage of the condenser (4) thereby utilizing the peak temperature of the refrigerant when it leaves the heat pump's refrigerant compressor (3) to provide further heating of the evaporated liquids leaving the liquids evaporator (4') in the separate heat exchanger (11).

2. The method for the evaporation and/or distillation of liquids as claimed in claim 1, **characterised in that** the pump or the compressor (10) each have a low pressure inlet and a high pressure outlet, the inlet in fluid communication with the evaporator and arranged to create and maintain a low evaporation pressure in the evaporator (4'), the pump or the compressor increasing the pressure and temperature of the evaporated liquids at the outlet of said pump or compressor.

3. The method for the evaporation and/or distillation of liquids as claimed in claim 1, **characterised in that** one or more heat exchangers (5a-5'a, 5b-5'b,...) is arranged to use heat produced by the heat pump to preheat the liquids before passing them to a larger heat exchanger (4-4') where the liquids are evaporated.

4. The method the for evaporation and/or distillation of liquids as claimed in claim 2, **characterised in that** one or more pressure reduction devices (9) are arranged to obtain a correct evaporation pressure; the one or more pressure reduction devices comprising: a high heat exchanger with one or more columns and/or pipes risers reducing the pressure of the flowing liquids by gravitation.

5. The method for the evaporation and/or distillation of liquids as claimed in claim 1, **characterised in that** one or more heat exchangers (11', 11", ...) is arranged downstream of the compressor (10) to postheat the evaporated liquids in order to obtain a sufficiently high temperature greater than that which may be obtained by the compression of the evaporated liquids only.

## Patentansprüche

1. Verfahren zur Verdampfung und/oder Destillation von Flüssigkeiten mithilfe einer Wärmepumpe, wobei die Wärmepumpe einen Kältemittelverdampfer (2), wo das Kältemittel durch die aus einem Reservoir natürlicher Energie zurückgewonnene Wärme erwärmt und verdampft wird; einen Kältemittelkondensator (4) umfasst, wo das Kältemittel durch die Flüssigkeiten, die verdampft werden und einen dazwischen befindlichen Kältemittelkondensator (3) gekühlt und rekondensiert wird, wobei der Kältemittelkondensator (4) einen Einlass und einen Auslass aufweist, wobei das Verfahren umfasst:
Zuführen der zu verdampfenden Flüssigkeiten zu einem Einlass eines Flüssigkeitsverdampfers (4');
Verdampfen der Flüssigkeiten im Flüssigkeitsverdampfer (4') durch die Wärme, die aus dem Kühlen und Rekondensieren des Kältemittels im Kältemittelkondensator (4) freigesetzt wurde, wobei der Kältemittelkondensator (4) der Wärmepumpe und der Flüssigkeitsverdampfer (4') einen Wärmetauscher umfassen und wobei der Verdampfungsdruck mit entweder einem Druckreduzierventil (9), das an die Einlassseite des Flüssigkeitsverdampfers (4') montiert ist oder mittels natürlichem Widerstand am Einlass des Verdampfers (4') zusammen mit verdampften Flüssigkeiten eines Verdichters (10) zum Saugen der verdampften Flüssigkeiten aus dem Verdampfer (4'), wobei das Verfahren durch folgenden Schritt gekennzeichnet ist:
Weiteres Erwärmen der verdampften Flüssigkeiten, die den Auslass des Flüssigkeitsverdampfers (4') verlassen haben, bevor die verdampften Flüssigkeiten in den Verdichter (10) für verdampfte Flüssigkeiten in einem separaten Wärmetauscher (11) eingeleitet werden, der sich stromaufwärts des Verdichters (10) für verdampfte Flüssigkeiten und stromabwärts vom Auslass des Flüssigkeitsverdampfers (4') befindet, um Sättigung der verdampften Flüssigkeiten vor dem Verdichter (10) zu eliminieren, wobei der separate Wärmetauscher (11) ein Heizelement (16), einen Einlass für verdampfte Flüssigkeiten in Flüssigkeitsverbindung mit dem Auslass des Verdampfers (4') und einen Auslass für erwärmte Flüssigkeiten in Flüssigkeitsverbindung mit dem Verdichter (10) umfasst, wobei das Heizelement (16), das die erste Stufe des Kondensators (4) bildet, dadurch die Spitzentemperatur des Kältemittels verwendet, wenn es den Kältemittelverdichter (3) der Wärmepumpe verlässt, um weitere Erwärmung der verdampften Flüssigkeiten bereitzustellen, welche den Flüssigkeitsverdampfer (4') im separaten Wärmetauscher (11) verlassen.

2. Verfahren zur Verdampfung und/oder Destillation von Flüssigkeiten wie in Anspruch 1 beansprucht, **dadurch gekennzeichnet, dass** die Pumpe oder der Verdichter (10) jeweils einen Niederdruckeinlass und einen Hochdruckauslass aufweisen, wobei der Einlass in Flüssigkeitsverbindung mit dem Verdampfer ist und eingerichtet ist, einen niedrigen Verdampfungsdruck im Verdampfer (4') zu schaffen und beizubehalten, wobei die Pumpe oder der Verdichter den Druck und die Temperatur der verdampften Flüssigkeiten am Auslass der Pumpe oder des Verdichters erhöhen.

3. Verfahren zur Verdampfung und/oder Destillation von Flüssigkeiten wie in Anspruch 1 beansprucht, **dadurch gekennzeichnet, dass** ein oder mehrere Wärmetauscher (5a-5'a, 5b-5'b,...) eingerichtet ist/sind, Wärme zu verwenden, die von der Wärmepumpe produziert wurde, um die Flüssigkeiten vorzuwärmen, bevor sie zu einem größeren Wärmetauscher (4-4') geleitet werden wo die Flüssigkeiten verdampft werden.

4. Verfahren zur Verdampfung und/oder Destillation von Flüssigkeiten wie in Anspruch 2 beansprucht, **dadurch gekennzeichnet, dass** ein oder mehrere Vorrichtungen (9) zur Druckreduzierung eingerichtet sind, einen korrekten Verdampfungsdruck zu erlangen;
wobei die eine oder die mehreren Vorrichtungen zur Druckreduzierung umfassen: einen hohen a Wärmetauscher mit einer oder mehreren Säulen und/oder Steigrohren, die den Druck der fließenden Flüssigkeiten durch Schwerkraft reduzieren.

5. Verfahren zur Verdampfung und/oder Destillation von Flüssigkeiten wie in Anspruch 1 beansprucht, **dadurch gekennzeichnet, dass** ein oder mehrere Wärmetauscher (11', 11",...) stromabwärts des Verdichters (10) angeordnet ist, um die verdampften Flüssigkeiten vorzuwärmen, um eine ausreichend hohe Temperatur größer als jene zu erlangen, die nur durch die Verdichtung der verdampften Flüssigkeiten erlangt werden könnte.

## Revendications

1. Procédé pour évaporer et/ou distiller des liquides à l'aide d'une thermopompe, la thermopompe comprenant évaporateur de réfrigérant (2) dans lequel le réfrigérant est chauffé et évaporé par la chaleur provenant d'un réservoir d'énergie naturelle ; un condenseur de réfrigérant (4), dans lequel le réfrigérant est refroidi et de nouveau condensé par les liquides en cours d'évaporation et un compresseur de réfrigérant (3) entre ceux-ci, le condenseur de réfrigérant (4) comportant une entrée et une sortie,
le procédé consistant à :
acheminer les liquides à évaporer vers une entrée d'un évaporateur de liquides (4') ;
évaporer lesdits liquides dans l'évaporateur de liquides (4') sous l'effet de la chaleur provenant du refroidissement et de recondensation du réfrigérant dans le condenseur de réfrigérant (4), dans lequel le condenseur de réfrigérant (4) de la thermopompe et l'évaporateur de liquides (4') comportent un échangeur thermique et dans lequel la pression d'évaporation est réduite soit par une soupape de réduction de pression (9) située du côté entrée de l'évaporateur de liquides (4') soit au moyen d'une résistance naturelle à l'entrée de l'évaporateur (4') en association avec un compresseur de liquides évaporés (10) pour aspirer les liquides évaporés de l'évaporateur (4'),
le procédé étant **caractérisé par** l'étape consistant à :
en outre chauffer les liquides évaporés qui proviennent de la sortie de l'évaporateur de liquides (4') avant que les liquides évaporés n'entrent dans le compresseur de liquides évaporés (10) dans un échangeur thermique séparé (11) situé en amont du compresseur de liquides évaporés (10) et en aval de la sortie de l'évaporateur de liquides (4') pour éliminer la saturation des liquides évaporés avant le compresseur (10), dans lequel l'échangeur thermique séparé (11) comporte un élément de chauffage (16), une entrée de liquides évaporés en communication fluidique avec la sortie de l'évaporateur (4') et une sortie de fluides chauffés en communication fluidique avec le compresseur (10), ledit élément de chauffage (16), formant le premier étage du condenseur (4) utilisant selon ce procédé la température de pointe du réfrigérant quand il sort du compresseur du réfrigérant de la thermopompe (3) pour davantage chauffer les liquides évaporés qui sortent de l'évaporateur de liquides (4') dans l'échangeur thermique séparé (11).

2. Procédé pour évaporer et/ou distiller des liquides selon la revendication 1, **caractérisé en ce que** la pompe ou le compresseur (10) comporte chacun une entrée basse pression et une sortie haute pression, l'entrée étant en communication fluidique avec l'évaporateur et étant agencée de sorte à créer et maintenir une basse pression d'évaporation dans l'évaporateur (4'), la pompe ou le compresseur accroissant la pression et la température des liquides évaporés à la sortie de ladite pompe ou dudit compresseur.

3. Procédé pour évaporer et/ou distiller des liquides selon la revendication 1, **caractérisé en ce que** un ou plusieurs échangeur(s) thermique (s) (5a-5'a, 5b-5'b,...) est/sont conçu (s) pour utiliser de la chaleur produite par la thermopompe pour préchauffer les liquides avant de les acheminer vers un échangeur thermique de plus grande capacité (4-4') dans lequel sont évaporés les liquides.

4. Procédé pour évaporer et/ou distiller des liquides selon la revendication 2, **caractérisé en ce que** un ou plusieurs dispositif(s) de réduction de pression (9) est/sont conçu(s) pour obtenir une pression d'évaporation correcte ; le un ou les plusieurs dispositif(s) de réduction de pression comportant : un échangeur de chaleur élevée doté d'une ou de plusieurs colonne(s) et/ou de risers réduisant la pression des liquides qui s'écoulent par gravitation.

5. Procédé pour évaporer et/ou distiller des liquides selon la revendication 1, **caractérisé en ce que** un ou plusieurs échangeur (s) thermique(s) (11', 11",...) est/sont situé(s) en aval du compresseur (10) pour chauffer ultérieurement les liquides évaporés afin d'obtenir une température suffisamment élevée supérieure à celle que pourrait obtenir uniquement la compression des liquides évaporés.
